(19) Europäisches Patentamt
European Patent Office
Office européen des brevets

(11) Publication number: 0 339 745 B1

(12) **EUROPEAN PATENT SPECIFICATION**

(45) Date of publication of patent specification: **18.01.95**

(51) Int. Cl.6: **C08L 73/00**, C08L 77/00, C08G 67/02

(21) Application number: **89201067.9**

(22) Date of filing: **25.04.89**

(54) **Polyketone polymer composition.**

(30) Priority: **29.04.88 US 187790**
**30.11.88 US 278098**

(43) Date of publication of application:
**02.11.89 Bulletin 89/44**

(45) Publication of the grant of the patent:
**18.01.95 Bulletin 95/03**

(84) Designated Contracting States:
**DE FR GB IT**

(56) References cited:
**EP-A- 0 333 300**
**FR-A- 2 149 932**
**US-A- 3 929 727**
**US-A- 4 546 147**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Gergen, William Peter**
**11311 Hylander**
**Houston**
**Texas 77007 (US)**
Inventor: **Hart, William Wayne Case**
**50 Sunrise Drive**
**Avon**
**Connecticut 06001 (US)**
Inventor: **Lutz, Robert Gardiner**
**632 Vista Grande Place**
**Santa Rosa**
**California 95403 (US)**

(74) Representative: **Tuijn, Jan Warnaar et al**
**Shell Internationale**
**Research Maatschappij B.V.**
**Intellectual Property Division**
**P.O. Box 162**
**NL-2501 AN Den Haag (NL)**

EP 0 339 745 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with a polyketone polymer composition, and with a process for its preparation.

The general class of polymers of carbon monoxide and one or more ethylenically unsaturated compounds has been known for some years.

More recently, the class of linear alternating polymers of carbon monoxide and unsaturated compounds, now often referred to as polyketones, has become of greater interest, in part because of improved methods of production.

These polymers have been shown to be of the repeating formula --CO-(A)-- where A is the moiety of an ethylenically unsaturated compound polymerized through the ethylenic unsaturation. For example, when the ethylenically unsaturated compound is ethene, the polymer will be represented by the repeating formula $--CO--(CH_2CH_2)--$.

A general process for preparing polyketones, is illustrated, for example, by EP-A-0121965 directed towards a preparation of polyketones to obtain a high yield, wherein a mixture of carbon monoxide and alkenically unsaturated hydrocarbon is polymerized in the presence of a novel catalyst system, obtained by combining a Group VIII metal compound (such as palladium, cobalt or nickel compound), the anion of a strong non-hydrohalogenic acid having a pKa below 2, and a bidentate ligand of phosphorus, arsenic or antimony.

These polyketones appear to have a number of physical, mechanical and chemical properties which render them suitable for many demanding thermoplastic applications, such as barrier material in food packaging or construction material in engineering.

It was felt that, although the polyketones per se are sufficiently tough for many applications, in some cases a higher impact strength and a higher ductility would be useful, provided the other, positive properties like solvent resistance and high melting point were not degraded.

It has now surprisingly been found that this objective is met by blending the polyketone with a polyamide in a weight ration of 70:30 or more. It has also been found that the resulting compositions present synergy with respect to certain physical properties, as will be explained hereafter.

Accordingly, the present invention relates to a polyketone polymer composition characterized by comprising a blend of a linear alternating polymer of carbon monoxide and at least one ethylenically unsaturated compound with a polyamide in a weight ratio of 70:30 or more.

Non-prepublished patent application EP-A-333300 of earlier date, filed for the contracting states BE, DE, ES, FR, GB, IT, NL and SE, deals with a moulding process for the polyketone polymers in which reinforcing polyamide fibres having a length of at least 3 mm can be used. Compositions wherein the polyamide is present exclusively in the form of reinforcing fibres having a length of at least 3 mm are excluded from protection in the contracting states designated in EP-A-333300.

The polyketone polymers which are employed as a component of the blends of the invention are linear alternating polymers of carbon monoxide and at least one ethylenically unsaturated compound (typically a hydrocarbon, but oxygen containing compounds, e.g. esters of ethylenically unsaturated acids, are also suitable). Suitable ethylenically unsaturated compounds or hydrocarbons for use as precursors of the polyketones polymers have up to 20 carbon atoms inclusive, preferably up to 10 carbon atoms inclusive, and are aliphatic such as ethene and other alpha-olefins including propene, butene, isobutene, 1-octene, and 1-dodecene, or are arylaliphatic containing an aryl substituent on an otherwise aliphatic moiety, particularly an aryl substituent on a carbon atom of the ethylenic unsaturation. Illustrative of this latter class of ethylenically unsaturated hydrocarbons are styrene, p-methylstyrene, p-ethylstyrene and m-methylstyrene. Preferred polyketones are copolymers of carbon monoxide and ethylene or terpolymers of carbon monoxide, ethene and a second ethylenically unsaturated hydrocarbon of at least 3 carbon atoms, particularly an alpha-olefin such as propene.

The structure of the polyketone polymer is that of a linear alternating polymer of carbon monoxide and at least one ethylenically unsaturated compound and the polymer will contain substantially one moiety of carbon monoxide for each moiety of unsaturated compound. When terpolymers of carbon monoxide, ethene and a second compound are employed in the blends of the invention there will be within the terpolymer at least two units incorporating a moiety of ethene for each unit incorporating a moiety of the second compound, preferably from 10 units to 100 units incorporating a moiety of ethylene for each unit incorporating a moiety of the second compound. The polymer chain is therefore represented by the formula

$$--[-CO-(CH_2-CH_2)--]_x--[-CO-(Y)--]_y--$$

where Y is the moiety obtained by polymerization of the second compound through the ethylenic unsaturation. The --[-CO-($CH_2$-$CH_2$-)--- units and the --CO-(Y)-- units are found randomly throughout the polymer chain and the ratio of y:x is preferably no more than 0.5. In the modification of the invention where copolymers of carbon monoxide and ethene are employed as a blend component and there is no second compound in the polymer chain, the polymer is represented by the above formula wherein y = 0. If y is other than 0, i.e., terpolymers are employed, ratios of y:x should most preferably be from 0.01 to 0.2. The end groups or "caps" of the polymer chain will depend on what materials were present during the preparation of the polyketone polymer and whether and how the polymer was purified. The precise properties of the polymer will not depend to any considerable extent upon the particular end groups so that the polymer is fairly represented by the above formula for the polymer chain.

Of particular interest are those polyketones of high molecular weight from about 1,000 to about 500,000, especially those of molecular weight over 10,000. The physical properties of the polyketone polymers will depend in part on the molecular weight of the polymer, whether the polymer is a copolymer or a terpolymer and the proportion of the second compound present in the case of a terpolymer.

Typical melting points are from 130°C to 350°C, especially from 180°C to 285°C. Polyketone polymers very suitable may have melting points of between 190 and 230°C, although polymers with melting points ranging from 230°C to 270°C may be usable herein as well.

Useful polyketones for the novel blends have limiting viscosity numbers (LVN) as measured by the method wherein the polymer is dissolved in metacresol at 60°C; using a standard capillary viscosity measuring device, such as a Cannon-Ubbelohde viscometer in the range of 0.5 to 10 and more preferably 0.8 to 4 and most preferably 0.8 to 2.5 LVN.

The polyketone blends herein are preferably "crystalline" or "semicrystalline" polyketone blends wherein some crystallinity occurs in one or more components of the polyketone blend while maintaining a blend of the amorphous phases of the components.

It is contemplated that in a suitable polyketone/polyamide composition, the weight ratio between the linear alternating polymer and the polyamide lies between 70:30 and 99:1. The compositions may also show weight ratios of 70:30 to 95:5.

The compositions of the invention may be modified by one or more conventional additives such as stabilizers and inhibitors of oxidative, thermal, and ultraviolet light degradation; lubricants and mold release agents, fire resistant materials, colorants including dyes and pigments, and other substances to modify the polymer. The additives can be incorporated into the composition at any stage in the preparation of the thermoplastic composition. Preferably the stabilizers are included early to preclude the initiation of degradation before the composition can be protected.

The polyamide usable herein is well known in the art and embraces both amorphous and at least partially crystalline polyamides, especially the latter. Preferred crystalline or semicrystalline compositions have a molecular weight of at least 5000 and are commonly referred to as nylons. Suitable nylons include those described in US-A-2,071,250; 2,071,251; 2,130,523; 2,130,948; 2,241,322; 2,312,966; 2,512,606; and 3,393,210. The nylon usable herein can be produced by condensation of equimolar amounts of a saturated dicarboxylic acid containing from 4 to 14 carbon atoms and a diamine. Excess diamine can be employed to provide an excess of amine end groups over carboxyl end groups in the polyamide. Examples of preferred nylons usable herein include nylon 6, polyhexamethylene adipamide (nylon 6,6), polyhexamethylene sebacamide (nylon 6,10), nylon 11, nylon 12, and polyhexamethylene dodecanoamide (nylon 6,12) and mixtures thereof. The polyamides produced by ring opening of lactams, e.g. polycaprolactam, polylauric lactam, poly-11-aminoundecanoic acid, bis(paraaminocyclohexyl) methane dodecanoamide are contemplated as usable herein. Especially preferred are polyhexamethylene adipamide, polyhexamethylene sebacamide, polycaprolactam, and mixtures thereof. It is possible to use in this invention, nylons prepared by the copolymerization of two of the above polymers or terpolymerization of the above polymers or their components, e.g., an adipic isophthalic acid hexamethylene diamine copolymer. Nylons usable herein are preferably linear with a melting point in excess of 200°C.

It has been found very surprisingly, that certain compositions of polyketones and polyamides are synergistic with respect to their mechanical behaviour. Without wishing to be bound by any theory, it is speculated that when polyketones of a given molecular weight are present in a given weight ratio with respect to the polyamide, some chemical bonding occurs between the different polymer molecules. Thus a new, super-strong and super-tough, structure is formed.

These new compositions can be made exclusively with (at least partially) crystalline polyamide. Preferred compositions are those wherein the weight ratio between the linear alternating polymer and the at least partially crystalline polyamide lies between 70:30 and 85:15, and wherein the limiting viscosity number (as measured at 60°C in m-cresol) of the unblended linear alternating polymer is at least 160.

Particularly preferred are compositions of a weight ratio between 75:25 and 80:20, especially of about 80:20. The limiting viscosity number should be as high as possible, but at higher values, extrudability becomes a problem. Preferred ranges are therefore from 1.65-2.00, especially from 1.70-1.95 LVN.

While compositions containing crystalline polyamides are preferred, those containing amorphous polyamides are suitable for certain applications as well. More specifically, suitable compositions can be prepared from, for example, the following, commercially available polyamides:

- polymer (A) having the formula:

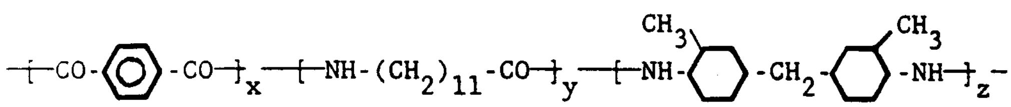

wherein x:y:z ~ 1:1:1;

- polymer (B) represented by the formula:

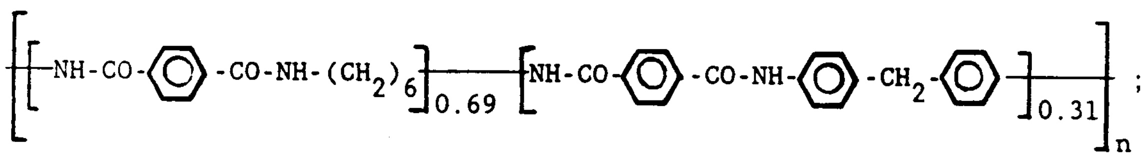

;

- polymer (C) represented by the formula:

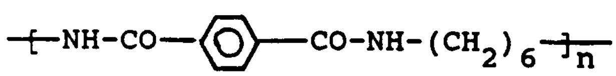

;

and

- polymer (D) represented by the formula:

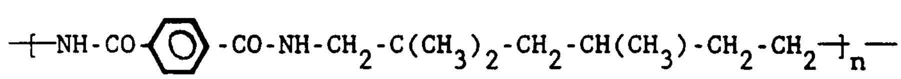

.

Polymer A has a $T_g$ of about 160°C.

Polymer B is also called cycloaliphatic polyamide, and has a $T_g$ of 156°C. Polymer C, also called nylon 6IcoT, has a $M_n$ of 14100, a $M_w$ of 49800 and a $T_g$ of 127°C.

Polymer D, also called nylon 3Me6T, has a $M_n$ of 20,000, a $M_w$ of 63,000, and a $T_g$ of 147°C.

Further, the present invention relates to a process for preparing a composition of a linear alternating polymer of carbon monoxide and at least one ethylenically unsaturated compound with a polyamide, characterized in that the process comprises the steps of:

(a) adding a linear alternating polymer of carbon monoxide and at least one ethylenically unsaturated compound to a polyamide forming a mixture in which the weight ratio of the polymers is 70:30 or more; and

(b) blending the mixture at temperatures between 130°C and 350°C therein forming a polymer composition.

When the polyamide is at least partially crystalline, step (b) is preferably carried out at temperatures between 175 and 300°C.

The method of blending the mixture of the polyketone polymer with the polyamide is not material as long as a relatively uniform distribution of the polyamide through the polyketone is obtained. It is preferred for the blend to have intimate mixing of the polymers, i.e. to have a microscopic distribution of polyamide through the polyketone, wherein the size of the dispersed phase is no more than 10 microns, preferably about 1 micron. In one modification, the blend components are extruded and the blend is obtained as an

extrudate. In an alternative modification, the components are blended in other mixing devices, such as high shear mixing devices or low shear mixing devices. It is also contemplated that the blends can be made by a so-called masterbatch method.

It is to be understood that when in the specification and claims herein, the amount of the polyamide or polyketone is expressed in terms of percent by weight, it is meant, unless otherwise indicated, percent by weight based on the total amount of the blend, excluding further components.

The invention is further illustrated in the following examples.

EXAMPLE 1

A number of compositions was prepared and tested for their chemical and physical stability and compatibility, as evidenced by ageing and breakage tests.

Formulation 1: (Control)

100% by weight polyketone, being a linear alternating terpolymer of carbon monoxide, ethene and propene and produced in the presence of a catalyst composition formed from palladium acetate, the anion of trifluoroacetic acid and 1,3-bis[diphenylphosphino)propane. The melting point of the terpolymer was 221°C and the polymer had a limiting viscosity number (LVN) of 1.48 (measured at 60°C in m-cresol). The polyketone was cyroground under nitrogen using a 0.21-0.25 mm screen, dried overnight at 50°C, then moulded into small plates, cut into strips, and aged in an oven for a number of days. The specimens were tested for breakage by finger bending the strips. The test results appear in Table I, below.

Formulation 2:

The polyketone material of Composition 1 was cryoground using a 0.21-0.25 mm screen and dry tumbled with cryoground nylon 6,6 in amounts of 90% by weight polyketone and 10% by weight polyamide nylon 6,6. The dry tumbled 90/10 blend was charged to one stage of a twin screw co-rotating 30 mm extruder. The extruder melt temperature profile varied from 220°C in the feed zone to 285°C at the die. A screw speed of 50% torque maximum at about 300 rpm was used. The blends were starve-fed into the extruder. The extruded strand was quenched in water at room temperature then chopped and pelletized. Pellets were moulded into small plates, cut into strips and aged in an oven for a number of days. The specimens were tested for breakage by finger bending the strips.

Formulation 3:

The polyketone material of Composition 1 was cryoground using a 0.21-0.25 mm screen, dry tumbled with cryoground nylon 6 in amounts of 90 %w polyketone and 10 %w nylon 6. The dry tumbled 90-10 blend was charged to one stage of a twin screw, co-rotating 30 mm extruder. The extruder melt temperature profile varied from 220°C in the feed zone to 285°C at the die. The screw speed for 50% torque maximum at about 300 rpm was used. The blends were starve fed into the extruder. The extruded strand was quenched in water at room temperature then chopped and pelletized. Pellets were moulded into small plates. Strips were cut from the plates and aged in an oven for a number of days. The samples were tested for breakage by finger bending the samples.

The physical properties of this composition are presented in Table I.

TABLE I

| | Formulations | | |
|---|---|---|---|
| | 1 | 2 | 3 |
| Nylon 6 (parts by weight) | - | - | 10 |
| Nylon 6,6 (parts by weight) | - | 10 | - |
| Polyketone (parts by weight) | 100 | 90 | 90 |
| Oven Aging at 100°C (mean time to failure -days) | 4 | 8 | 2 |
| Oven Aging at 120°C (mean time to failure -days) | - | 2 | 0.2 |
| Yellowness Index as determined by ASTM D-1925 after 100°C ageing | 59 | 108 | 48 |
| Cell size determined by visual inspection of a scanning transmission micrograph | - | 0.2 | 0.8 |

EXAMPLE 2

Blends were compounded from a polyketone (a linear alternating terpolymer of carbon monoxide, ethene and propene having a LVN of 1.81 dl/g (measured at 60°C in m-cresol)) and a commercial crystalline polyamide (Nylon 6,6)) using a 30 mm twin screw extruder with L/D equal to thirteen.

All blends also contained a minute quantity of a commercial polyacid as a processing aid. Subsequent to compounding, blends were injection moulded on a 25 mm moulding machine with L/D equal to eighteen. Moulded specimens were stored over desiccant and tested in the "dry as moulded" state.

The samples prepared were tested for their impact strength in a standard "notched Izod" apparatus, at 23°C and at 0°C, their yield stress and their tensile modulus. The results are given in table II.

TABLE II

| Polyamide Content (%w) | Notched Izod Impact Strength (m.g/cm) at 0°C | at 23°C | Young's modulus (ksi) measured | expected | Yield stress (ksi) measured | expected |
|---|---|---|---|---|---|---|
| 0 | 48 | 208 | 225 | 225 | 9.02 | 9.02 |
| 5 | 69 | 197 | 236 | 233 | 9.08 | 9.17 |
| 10 | 65 | 192 | 252 | 242 | 9.20 | 9.32 |
| 15 | 88 | 225 | 282 | 250 | 9.44 | 9.47 |
| 20 | 99 | 387 | 289 | 258 | 9.51 | 9.62 |
| 25 | 92 | 272 | 273 | 266 | 10.23 | 9.77 |
| 30 | 83 | 238 | 269 | 275 | 10.61 | 9.92 |
| 100 | - | - | 390 | 390 | 12.00 | 12.00 |

It is interesting to note that at polyamide contents above about 15 %w, the measured values for impact strength, Young's (tensile) modulus and tensile yield stress are better than would be expected by addition of the relative contributions of the components of the composition. This proves that at concentrations of about 15-30 %w polyamide content, the system is not behaving purely as a mixture, but rather as a chemically modified polyketone. The result is a synergistic, rather than additive, mechanical behaviour. The

optimum composition contains about 20 %w of Nylon 6,6, and indeed only this composition provided samples exhibiting hinged, ductile failure, and a dense stress-whitened zone after fracture.

EXAMPLE 3

A number of 80-20 blends between polyketones of varying limiting viscosity numbers (LVN, related to the molecular weight) and polyamide were prepared in a manner analogous to the preceding example, and tested again for their impact strength using the notched Izod device. The results are given in Table III.

TABLE III

| Polyketone LVN* | Polyketone LVN+ | Notched Izod Impact Strength (m.g/cm) at 23 °C |
|---|---|---|
| 1.31 | - | 151 |
| 1.53 | - | 227 |
| 1.73 | 1.66 | 235 |
| 1.81 | 1.71 | 522 |
| 1.78 | 1.78 | 693 |
| 1.79 | 1.78 | 1168 |
| 2.25 | - | not tested |

* measured at 60°C in m-cresol
\+ calculated from melt viscosity measurement

The blend with polyketone terpolymer of extremely high LVN could not be moulded because of its prohibitively high melt viscosity, although it could be compounded with the polyamide. It is evident that in order to arrive at supertough compositions, the LVN should preferably be as high as competible with processing ease. The impact strengths at 0°C showed the same behaviour as those at 23°C, but their absolute values and their relative differences were many times smaller. The maximum value was reached again with the composition having an LVN of 1.81/1.71, namely 153 m.g./cm.

EXAMPLE 4

4/1 (Control):

98.5% by weight polyketone being a linear alternating terpolymer of carbon monoxide, ethene and propene, was produced in the presence of a catalyst composition formed from palladium acetate, the anion of trifluoroacetic acid and 1,3-bis[diphenylphosphino]-propane. The melting point of the terpolymer was 223°C. The polymer had a limiting viscosity number (LVN) of 1.79 (measured at 60°C in m-cresol). 1.0% by weight Surlyn 9520 (Trademark) and 0.5% by weight Ethanox 330 (Trademark) were added as antioxidants to the polyketone polymer. The polyketone was cryoground under nitrogen using a 0.21-0.25 mm screen, dried overnight at 50°C, injection moulded into small plates, cut into strips, and aged in an oven for a number of days. These "dry as moulded" specimens (referred to hereafter as Sample 1) were tested for impact strength using notched Izod testing, ASTM tests D-790, D-3029, D-638, and D-256. The test results appear in Table IV, below.

4/2:

80 wt% of addivated polyketone material of Formulation 1 was cryoground using a 0.21-0.25 mm screen and dry tumbled with 20 wt% of the amorphous polyamide, according to formula (C) defined hereinbefore. This dry tumbled 80/20 blend was charged to a one-stage twin screw co-rotating 30 mm extruder. The extruder melt temperature profile varied from 220°C in the feed zone to up to 285°C at the die. A temperature of 260°C at the die was preferred. A screw speed of about 300 rpm (50% torque maximum) was used. The blends were starve-fed into the extruder. The extruded strand was quenched in water at room temperature then chopped and pelletized. Pellets were moulded into small plates, cut into straps and aged in an oven for a number of days. These specimens referred to hereafter as Sample 2, were tested for tensile strength using the indicated ASTM testing procedures; the test results appear in Table IV.

4/3 (Control):

60 wt% of addivated polyketone material of Formulation 1 was cryoground using a 0.21-0.25 mm screen then dry tumbled with 40 wt% of the same amorphous polyamide as in formulation 2. The blend was worked up and tested as in Example 4/2.

4/4 (Control):

Samples of 99wt% of Polymer C with 1wt% Surlyn 9520 (Trademark) were prepared by blending in the manner described above to produce a comparative blend. These resultant samples referred to hereafter as Sample 4, were prepared and tested for notched Izod and the results appear on Table IV.

4/5 (Control):

100wt% polyketone being linear alternating terpolymer of carbon monoxide, ethene and propene, was produced in the presence of a catalyst composition formed from palladium acetate, the anion of trifluoroacetic acid and 1,3-bis[diphenylphosphino]-propane. The melting point of the terpolymer was 221°C and the polymer had a limiting viscosity number (LVN) of 1.78 (measured at 60°C in m-cresol). The polyketone was prepared and tested as sample 4/1.

4/6:

80 wt% of the polyketone material of formulation 5 was cryoground using a 0.21-0.25 mm screen and dry tumbled with 20 wt% of the amorphous polyamide, according to formula C defined hereinbefore. The sample was further prepared and tested as the preceding samples 4/2 to 4/4.

TABLE IV

| | Sample 1 | 2 | 3 | 4 | 5 | 6 |
|---|---|---|---|---|---|---|
| Polymer C (wt%) | - | 20 | 40 | 100* | - | 20 |
| Polyketone | 100* | 80* | 60* | - | 100 | 80 |
| Notched Izod impact at room temperature in m.g/cm | 269 | 281 | 199 | 242 | 157 | 152 |
| Tensile Properties According to ASTM D-256, D-638 and D-790 | | | | | | |
| Tangent Mod (MPa) | 1427 | 1620 | 1827 | Not tested | 1706 | 1452 |
| Stress Max (MPa) | 60 | 61 | 72 | Not tested | 69.2 | 66.1 |
| Stress Break (MPa) | 57 | 58 | 63 | Not tested | 61.6 | 54.0 |
| Elongation, Break | 163 | 35 | 113 | Not tested | 77 | 187 |
| % (range) | (22-257) | (4-116) | (27-229) | | - | - |

*) Additive containing

It appears that by adding the amorphous polyamide to the polyketone, modulus decreases and elongation increases, forming a blend with lower tensile properties (unless additives are present).

## Claims

1. Polyketone polymer compositions characterized by comprising a blend of a linear alternating polymer of carbon monoxide and at least one ethylenically unsaturated compound with a polyamide in a weight ratio of 70:30 or more, on the understanding that the polyamide is not present exclusively in the form of reinforcing fibres having a length of at least 3 mm.

2. A composition as claimed in claim 1, characterised in that said linear alternating polymer is of the formula

$$-[(CO)-(C_2H_4)]_x-[(CO)-(Y)]_y-$$

wherein Y is the moiety of an ethylenically unsaturated hydrocarbon of at least 3 carbon atoms polymerised through its ethylenic unsaturation, and the ratio of y:x is no more than 0.5.

3. A composition as claimed in claim 2, characterised in that Y represents a propylene group, and the ratio of y:x is from 0.01 to 0.2.

4. A composition as claimed in claim 2, characterised in that y is 0.

5. A composition as claimed in any of claims 1-4, characterised in that the weight ratio between the linear alternating polymer and the polyamide lies between 70:30 and 99:1.

6. A composition as claimed in claim 5, characterised in that the said weight ratio lies between 70:30 and 95:5.

7. A composition as claimed in any of claims 1-6, characterised in that the polyamide is at least partially crystalline.

8. A composition as claimed in claim 7, characterised in that the polyamide has a number average molecular weight of at least 5,000.

9. A composition as claimed in claim 7 or 8, characterised in that the at least partially crystalline polyamide is selected from the group consisting of nylon 6, nylon 6,10, nylon 11, nylon 12, nylon 6,12 and mixtures thereof.

10. A composition as claimed in claim 9, characterised in that the at least partially crystalline polyamide is selected from the group consisting of polyhexamethylene adipamide, polyhexamethylene sebacamide, polycaprolactam and mixtures thereof.

11. A composition as claimed in any of claims 7-10, characterised in that the weight ratio between the linear alternating polymer and the at least partially crystalline polyamide lies between 70:30 and 85:15.

12. A composition as claimed in any of claims 7-11, characterised in that the limiting viscosity number (as measured at 60 °C in m-cresol) of the unblended linear alternating polymer is at least 1.60.

13. A composition as claimed in any of claims 1-6, characterised in that the polyamide is amorphous.

14. A composition as claimed in claim 13, characterised in that the amorphous polyamide is selected from the group consisting of:
    - polymer (A) having the formula:

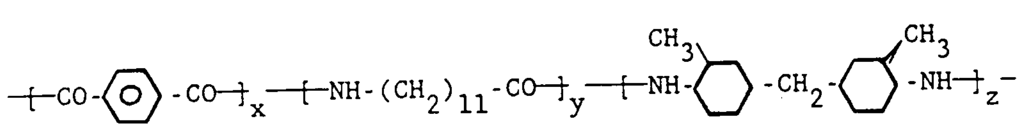

wherein x:y:z ~ 1:1:1;

- polymer (B) represented by the formula:

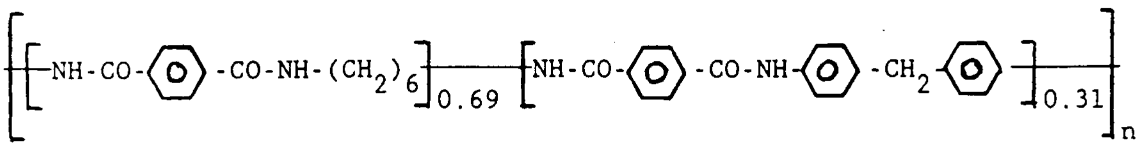 ;

- polymer (C) represented by the formula:

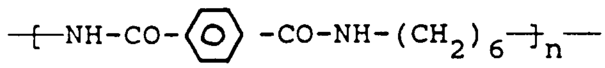 ;

and

- polymer (D) represented by the formula:

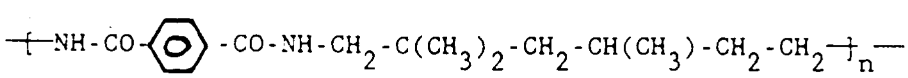

**15.** A composition as claimed in any of claims 1-14, characterized in that the polymers, excluding any polyamide present as reinforcing fibre, are intimately mixed, the size of the dispersed phase being no more than 10 microns.

**16.** Process for preparing a polyketone polymer composition according to any of claims 1-15, characterized in that it comprises the following steps:
(a) adding a linear alternating polymer of carbon monoxide and at least one ethylenically unsaturated compound to a polyamide forming a mixture in which the weight ratio of the polymers is 70:30 or more; and
(b) blending the mixture at temperatures between 130 and 350 °C therein forming a polymer composition.

**17.** A process as claimed in claim 16, characterised in that the polyamide is at least partially crystalline and that step (b) is carried out at temperatures between 175 and 300°C.

## Patentansprüche

**1.** Polyketonpolymerzusammensetzungen, dadurch gekennzeichnet, daß sie eine Mischung aus einem linearen alternierenden Polymer aus Kohlenmonoxid und mindestens einer ethylenisch ungesättigtn Verbindung mit einem Polyamid in einem Gewichtsverhältnis von 70:30 oder mehr enthalten, wobei das Polyamid nicht ausschließlich in Form von Verstärkungsfasern mit einer Länge mindestens 3 mm vorliegt.

**2.** Eine Zusammensetzung, wie in Anspruch 1 beansprucht, dadurch gekennzeichnet, daß das genannte lineare alternierende Polymer die Formel

$$\{(CO)-(C_2H_4)\}_x\{(CO)-(Y)\}_y-$$

aufweist, in welcher Y der Molekülteil eines ethylenisch ungesättigten Kohlenwasserstoffs mit mindestens 3 Kohlenstoffatomen ist, der durch seine ethylenische Nicht-Sättigung polymerisiert ist, und das Verhältnis von y:x nicht höher als 0,5 ist.

**3.** Eine Zusammensetzung , wie in Anspruch 2 beansprucht, dadurch gekennzeichnet, daß Y eine Propylengruppe darstellt, und das Verhältnis von y:x 0,01 bis 0,2 beträgt.

**4.** Eine Zusammensetzung, wie in Anspruch 2 beansprucht, dadurch gekennzeichnet, daß y den Wert 0 aufweist.

**5.** Eine Zusammensetzung, wie in einem der Ansprüche 1 bis 4 beansprucht, dadurch gekennzeichnet, daß das Gewichtsverhältnis zwischen dem linearen alternierenden Polymer und dem Polyamid zwischen 70:30 und 99:1 liegt.

**6.** Eine Zusammensetzung , wie in Anspruch 5 beansprucht, dadurch gekennzeichnet, daß das genannte Gewichtsverhältnis zwischen 70:30 und 95:5 liegt.

**7.** Eine Zusammensetzung, wie in einem der Ansprüche 1 bis 6 beansprucht, dadurch gekennzeichnet, daß das Polyamid mindestens teilweise kristallin ist.

**8.** Eine Zusammensetzung, wie in Anspruch 7 beansprucht, dadurch gekennzeichnet ,daß das Polyamid ein durchschnittliches Molekulargewicht (Zahlenmittel) von mindestens 5000 aufweist.

**9.** Eine Zusammensetzung, wie in Anspruch 7 oder 8 beansprucht, dadurch gekennzeichnet, daß das zumindest teilweise kristalline Polyamid ausgewählt ist aus der Gruppe, bestehend aus Nylon 6, Nylon 6,10, Nylon 11, Nylon 12, Nylon 6,12 und Mischungen davon.

**10.** Eine Zusammensetzung, wie in Anspruch 9 beansprucht, dadurch gekennzeichnet, daß das zumindest teilweise kristalline Polyamid ausgewählt ist aus der Gruppe, bestehend aus Polyhexamethylenadipamid, Polyhexamethylensebacamid, Polycaprolactam und Mischungen davon.

**11.** Eine Zusammensetzung, wie in einem der Ansprüche 7 bis 10 beansprucht, dadurch gekennzeichnet, daß das Gewichtsverhältnis zwischen dem linearen alternierenden Polymer und dem zumindest teilweise kristallinen Polyamid zwischen 70:30 und 85:15 liegt.

**12.** Eine Zusammensetzung, wie in einem der Ansprüche 7 bis 11 beansprucht, dadurch gekennzeichnet, daß die Viskositätsgrenzzahl (gemessen bei 60°C in m-Cresol) des nicht vermischten linearen alternierenden Polymers mindestens 1,60 beträgt.

**13.** Eine Zusammensetzung, wie in einem der Ansprüche 1 bis 6 beansprucht, dadurch gekennzeichnet, daß das Polyamid amorph ist.

**14.** Eine Zusammensetzung, wie in Anspruch 13 beansprucht, dadurch gekennzeichnet, daß das amorphe Polyamid ausgewählt ist aus der Gruppe, bestehend aus:
Polymer (A) der Formel:

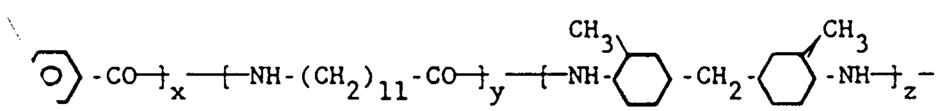

in welcher x:y:z ~ 1:1:1 ist;
Polymer (B), dargestellt durch die Formel

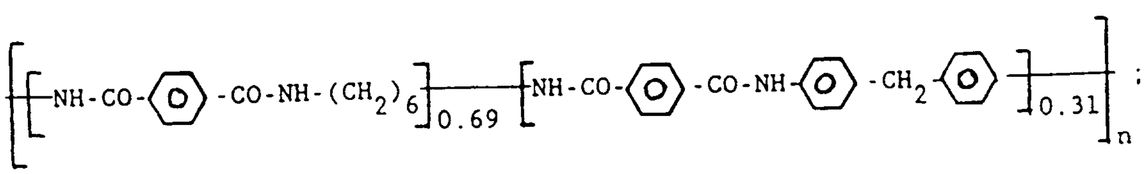

- Polymer (C), dargestellt durch die Formel

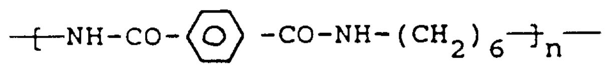

- Polymer D, dargestellt durch die Formel:

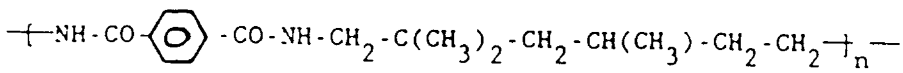

**15.** Eine Zusammensetzung, wie in einem der Ansprüche 1 bis 14 beansprucht, dadurch gekennzeichnet, daß die Polymere unter Ausschluß jeglichen als Verstärkungsfaser vorliegenden Polyamids, innig miteinander vermischt werden, wobei die Größe der dispergierten Phase 10 $\mu$m nicht überschreiten darf.

**16.** Verfahren zur Herstellung einer Polyketonpolymerzusammensetzung nach einem der Ansprüche 1 bis 15, dadurch gekennzeichnet, daß es die folgenden Verfahrensstufen umfaßt:
(a) das Zugeben eines linearen alternierenden Polymers aus Kohlenmonoxid und mindestens einer ethylenisch ungesättigten Verbindung zu einem Polyamid unter Bildung einer Mischung, in welcher das Gewichtsverhältnis der Polymere 70:30 oder mehr beträgt; und
(b) das Mischen der Mischung bei Temperaturen von 130°C bis 350°C unter Bildung einer Polymerzusammensetzung.

**17.** Ein Verfahren, wie in Anspruch 16 beansprucht, dadurch gekennzeichnet, daß das Polyamid zumindest teilweise kristallin ist und daß Stufe (b) bei Temperaturen zwischen 175 und 300°Cdurchgeführt wird.

## Revendications

**1.** Compositions de polymère polycétonique, caractérisées en ce qu'elles comportent un mélange d'un polymère linéaire alterné de monoxyde de carbone et d'au moins un composé à insaturation éthylénique, avec un polyamide selon un rapport pondéral de 70:30 ou plus, à la condition que le polyamide ne soit pas présent exclusivement sous la forme de fibres de renforcement présentant une longueur d'au moins 3 mm.

**2.** Une composition telle que revendiquée dans la revendication 1, caractérisée en ce que ledit polymère linéaire alterné présente la formule

$$\{(CO)\text{-}(C_2H_4)\}_x\{(CO)\text{-}(Y)\}_y\text{-}$$

dans laquelle y est la partie constituée d'un hydrocarbure à insaturation éthylénique d'au moins trois atomes de carbone, polymérisée par l'intermédiaire de son insaturation éthylénique, et le rapport de y:x est d'au maximum 0,5.

**3.** Une composition telle que revendiquée dans la revendication 2, caractérisée en ce que Y représente un groupe propylène, et que le rapport de y:x est de 0,01 à 0,2.

**4.** Une composition telle que revendiquée dans la revendication 2, caractérisée en ce que y est 0.

**5.** Une composition telle que revendiquée dans l'une des revendications 1 à 4, caractérisée en ce que le rapport pondéral entre le polymère linéaire alterné et le polyamide se situe entre 70:30 et 99:1.

**6.** Une composition telle que revendiquée dans la revendication 5, caractérisée en ce que ledit rapport pondéral se situe entre 70:30 et 95:5.

7. Une composition telle que revendiquée dans l'une quelconque des revendications 1 à 6, caractérisée en ce que le polyamide est au moins partiellement cristallin.

8. Une composition telle que revendiquée dans la revendication 7, caractérisée en ce que le polyamide présente un poids moléculaire moyen en nombre d'au moins 5 000.

9. Une composition telle que revendiquée dans la revendication 7 ou 8, caractérisée en ce que le polyamide au moins partiellement cristallin est choisi dans le groupe constitué du nylon 6, du nylon 6,10, du nylon 11, du nylon 12, du nylon 6,12 et de mélanges de ceux-ci.

10. Une composition telle que revendiquée dans la revendication 9, caractérisée en ce que le polyamide au moins partiellement cristallin est choisi dans le groupe constitué du polyhexaméthylène adipamide, du polyhexaméthylène sébacamide, du polycaprolactame et des mélanges de ceux-ci.

11. Une composition telle que revendiquée dans l'une quelconque des revendications 7 à 10, caractérisée en ce que le rapport pondéral entre le polymère linéaire alterné et le polyamide au moins partiellement cristallin se situe entre 70:30 et 85:15.

12. Une composition telle que revendiquée dans l'une quelconque des revendications 7 à 11, caractérisée en ce que l'indice de viscosité limite (tel que mesuré à 60°Cdans du m-crésol) du polymère linéaire alterné, non mélangé, est d'au moins 1,60.

13. Une composition telle que revendiquée dans l'une quelconque des revendications 1 à 6, caractérisée en ce que le polyamide est amorphe.

14. Une composition telle que revendiquée dans la revendication 13, caractérisée en ce que le polyamide amorphe est choisi dans le groupe constitué des :

- polymère (A) ayant la formule :

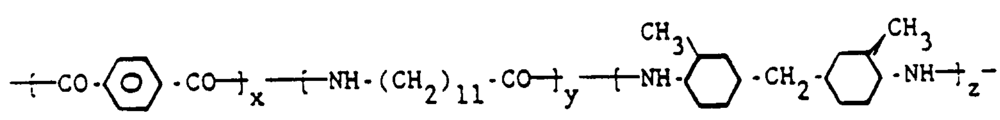

dans laquelle x:y:z est approximativement égal à 1:1:1 ;

- polymère (B) représenté par la formule :

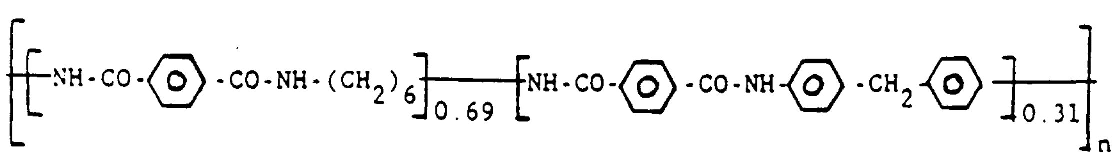

;

- polymère (C) représenté par la formule :

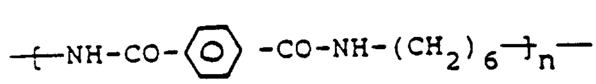

;

et

- polymère (D) représenté par la formule :

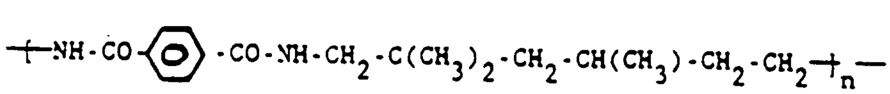

.

**15.** Une composition telle que revendiquée dans l'une quelconque des revendications 1 à 14, caractérisée en ce que les polymères, à l'exclusion d'un polyamide quelconque présent sous forme de fibre de renforcement, sont intimement mélangés, la dimension de la phase dispersée ne dépassant pas 10 microns.

**16.** Procédé pour préparer une composition de polymère polycétonique selon l'une quelconque des revendications 1 à 15, caractérisé en ce qu'elle comporte les étapes suivantes :

(a) l'addition d'un polymère linéaire alterné de monoxyde de carbone et d'au moins un composé à insaturation éthylénique à un polyamide de façon à former un mélange dans lequel le rapport pondéral des polymères est de 70:30 ou plus; et

(b) le malaxage du mélange à des températures entre 130 et 350°C de façon à former une composition polymère.

**17.** Un procédé tel que revendiqué dans la revendication 16, caractérisé en ce que le polyamide est au moins partiellement cristallin et que l'étape (b) est mise en oeuvre à des températures entre 175 et 300°C.